# DEMANDE DE BREVET EUROPEEN

(11) **EP 2 138 371 A1**
(43) Date de publication de la demande: **30.12.2009**
(21) Numéro de dépôt: 09163826.2
(22) Date de dépôt: 25.06.2009
(51) Int. Cl.: B60W 20/00, B60K 6/442, B60K 6/48, B60K 6/52, B60W 10/02, B60W 10/08

(54) **Procédé d'accouplement pour véhicule électrique ou hybride entre un arbre d'une machine électrique et un arbre de roues**

(30) Priorité: 27.06.2008 FR 0854355
(71) Demandeur: PEUGEOT CITROËN AUTOMOBILES SA, 78140 Velizy-Villacoublay (FR)
(72) Inventeur: Schaeffer, Eric, 92250, La Garenne-Colombes (FR)

(57) **Abrégé**

La présente invention concerne essentiellement un procédé d'accouplement entre un arbre (2) d'une machine (3) électrique et un arbre (5) de roues (7) pour véhicule électrique ou hybride. Conformément à l'invention, on fournit à la machine (3) électrique une consigne de régime correspondant à la vitesse (WROUES) de roues (7). Lorsque la vitesse (WMEL) de l'arbre (2) de la machine (3) atteint un seuil calibrable, on applique un couple nul sur l'arbre (2) de la machine (3) et on actionne le dispositif (17) de synchronisation de manière à égaliser la vitesse (WMEL) de l'arbre (2) de la machine (3) avec la vitesse (WROUES) de l'arbre (5) de roues (7). Dès que la vitesse (WMEL) de l'arbre (2) de la machine (3) est égale à la vitesse (WROUES) de l'arbre (5) de roues (7), on actionne le dispositif (19) de crabotage de manière à accoupler l'arbre (2) de la machine (3) électrique avec l'arbre (5) de roues (7) du véhicule.

## Description

. La présente invention concerne un procédé d'accouplement entre un arbre d'une machine électrique et un arbre de roues d'un véhicule électrique ou hybride. L'invention a notamment pour but de faciliter le pilotage de la machine électrique lors d'un tel accouplement.

. L'invention trouve une application particulièrement avantageuse dans le domaine des véhicules hybrides combinant l'utilisation d'une chaîne de traction électrique assurant la traction électrique d'un des trains du véhicule et d'une chaîne de traction thermique assurant la traction thermique de l'autre train du véhicule. Toutefois, l'invention pourrait également être mise en oeuvre avec des véhicules hybrides présentant une autre architecture ou des véhicules de type tout électrique.

. On connaît des véhicules électriques ou hybrides ayant une chaîne de traction électrique formée par une machine électrique accouplée aux roues. Un dispositif de stockage d'énergie relié à cette machine permet de fournir de l'énergie lorsque la machine fonctionne en mode moteur ou de la stocker lorsque la machine fonctionne en mode générateur.

. L'arbre de la machine est relié à l'arbre de roues par l'intermédiaire d'un dispositif de transmission comportant au moins un rapport de vitesse formé par un pignon monté libre sur un des arbres et un pignon lié angulairement avec l'autre arbre. Un dispositif de crabotage associé à la roue libre assure l'accouplement ou non de la machine avec les roues du véhicule. Lorsque le dispositif de crabotage assure une liaison entre la roue libre et l'arbre sur lequel il est monté (position crabotée), la machine électrique est accouplée aux roues ; tandis que lorsque le dispositif de crabotage est dégagé de la roue libre (position décrabotée), la machine est désaccouplée de l'arbre de roues.

. Dans les véhicules existants, pour craboter le rapport de vitesse de manière à accoupler la machine électrique avec les roues du véhicule, la machine électrique assure d'abord l'égalisation complète de la vitesse de son arbre avec celle des roues (au rapport de démultiplication près), puis le rapport est engagé au moyen du dispositif de crabotage. Toutefois, le pilotage du moteur électrique est très complexe, car il difficile de garantir une précision du contrôle en régime de la machine électrique quelles que soient les conditions de roulage du véhicule.

. Il existe donc le besoin d'une stratégie d'accouplement dans laquelle la machine électrique est sollicitée de manière plus souple que dans les procédés existants.

. L'invention comble ce besoin en proposant un procédé dans lequel la machine est pilotée dans un premier temps pour atteindre une vitesse proche mais pas exactement égale à celle de l'arbre de roues. Un dispositif de synchronisation termine ensuite l'égalisation des vitesses entre les deux arbres (au rapport de démultiplication près), puis le crabotage final du rapport de vitesse est effectué. L'invention permet ainsi de se passer d'un pilotage complexe de la machine et, dans le même temps, de garder une taille modérée de dispositif de synchronisation.

. L'invention concerne donc un procédé d'accouplement entre un arbre d'une machine électrique et un arbre de roues pour véhicule électrique ou hybride, la machine électrique assurant la traction d'un des trains du véhicule,
- ce véhicule comportant un dispositif de transmission installé entre l'arbre de la machine électrique et l'arbre de roues, ce dispositif de transmission comportant un rapport de vitesse formé par un pignon lié en rotation à l'un des arbres et un pignon monté libre sur l'autre arbre,
- un dispositif de synchronisation et un dispositif de crabotage étant associés au pignon libre du rapport,
**caractérisé en ce qu**'il comporte les étapes suivantes,
- on fournit à la machine électrique une consigne de régime correspondant à la vitesse de l'arbre de roues, au rapport de démultiplication près entre l'arbre de la machine électrique et l'arbre de roues,
- lorsque la vitesse de l'arbre de la machine électrique atteint un seuil calibrable, on applique un couple nul sur l'arbre de la machine électrique et on actionne le dispositif de synchronisation de manière à égaliser la vitesse de l'arbre de la machine électrique avec la vitesse de l'arbre de roues, et
- dès que la vitesse de l'arbre de la machine électrique est égale à la vitesse de l'arbre de roues au rapport de démultiplication près, on actionne, dans une phase de crabotage, le dispositif de crabotage, de manière à accoupler l'arbre de la machine électrique avec l'arbre de roues du véhicule.

. Selon une mise en oeuvre, le véhicule est en mouvement de sorte que la vitesse de l'arbre de roues présente une vitesse non nulle.

. Selon une mise en oeuvre, le seuil calibrable est compris entre 70 et 95% de la vitesse de rotation des roues.

. Selon une mise en oeuvre, après la phase de crabotage, on maintient l'effort de crabotage pendant une durée de temporisation.

. Selon une mise en oeuvre, la durée de temporisation est comprise entre 50 et 100 millisecondes.

. Selon une mise en oeuvre, après la phase de crabotage, un couple est de nouveau appliqué sur l'arbre de la machine électrique.

. L'invention concerne en outre un véhicule automobile mettant en oeuvre le procédé selon l'invention **caractérisé en ce qu**'il comporte :
- une chaîne de traction assurant la traction d'un des trains du véhicule, cette chaîne de traction comportant une machine électrique ayant un arbre relié à un arbre de roues par l'intermédiaire d'un dispositif de transmission,
- ce dispositif de transmission comportant un rapport de vitesse formé par un pignon lié en rotation à l'un des arbres et un pignon monté libre sur l'autre arbre,
- un dispositif de synchronisation et un dispositif de crabotage étant associés au pignon libre,
**caractérisé en ce que** le dispositif de synchronisation et le dispositif de crabotage distincts l'un de l'autre sont positionnés de part et d'autre du pignon libre et sont commandés de manière hydraulique.

. Selon un mode de réalisation, le rapport de vitesse est unique.

. Selon un mode de réalisation, il comporte une chaîne de traction thermique assurant la traction de l'autre train du véhicule.

. Selon un mode réalisation, la chaîne de traction électrique assure la traction du train arrière, tandis que la chaîne de traction thermique assure la traction du train avant du véhicule.

. L'invention sera mieux comprise à la lecture de la description qui suit et à l'examen des figures qui l'accompagnent. Ces figures sont données à titre illustratif mais nullement limitatif de l'invention. Elles montrent :

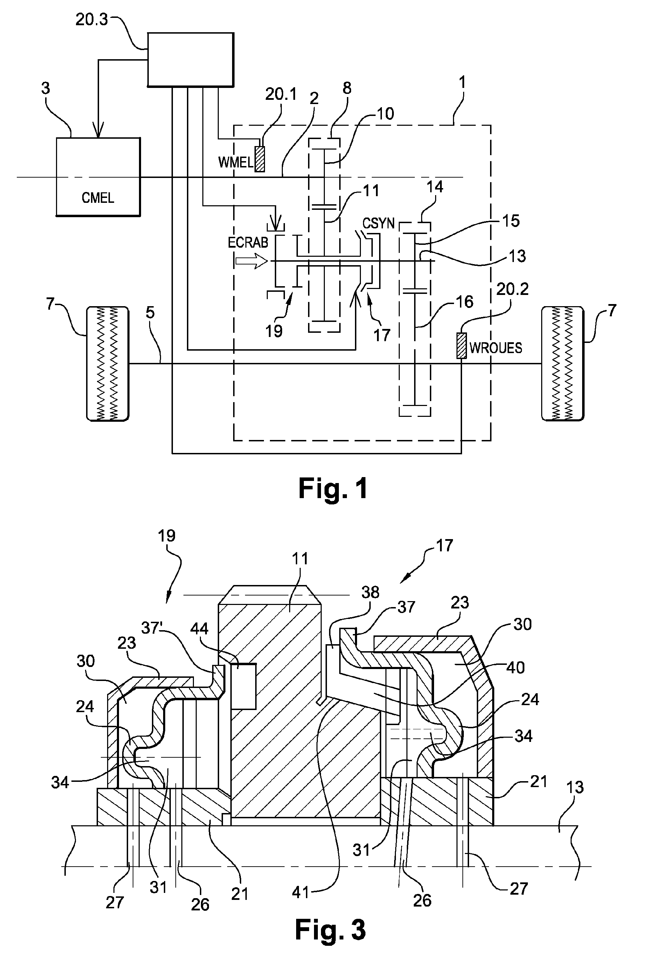

. Figure 1 : une représentation schématique d'un dispositif de transmission selon l'invention installé entre un arbre de machine électrique et un arbre de roues d'un véhicule hybride ou électrique ;

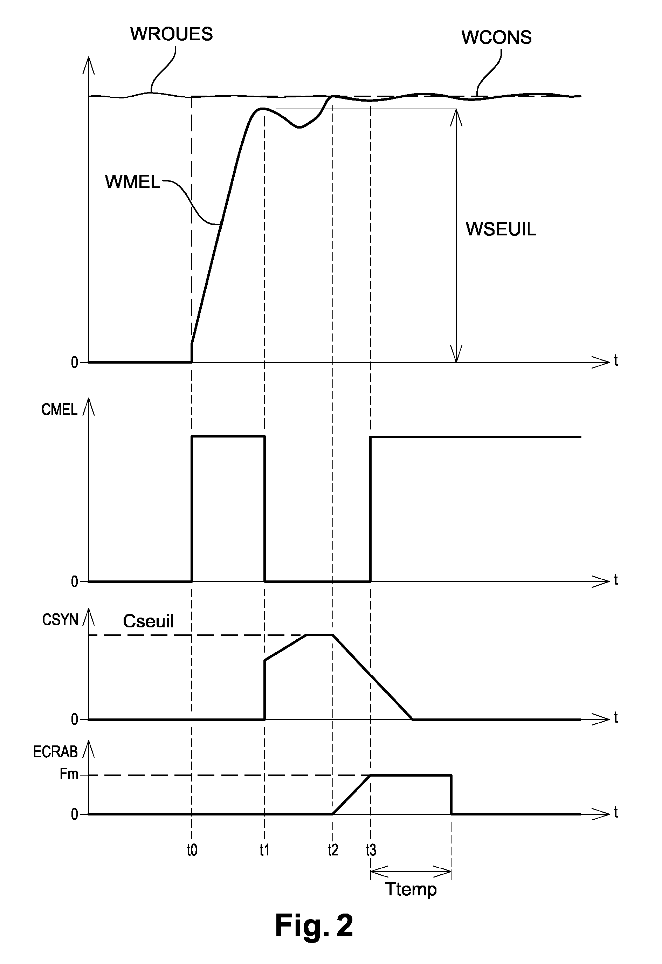

. Figure 2 : une représentation de l'évolution temporelle des régimes des roues, du couple et du régime de la machine électrique, du couple de synchronisation et de l'effort de crabotage, lors de la mise en oeuvre du procédé d'accouplement selon l'invention ;

. Figure 3 : une vue en coupe du dispositif de synchronisation et du dispositif de crabotage utilisés avec le dispositif de transmission selon l'invention.

. Les éléments identiques conservent la même référence d'une figure à l'autre.

. La figure 1 montre un dispositif 1 de transmission assurant l'accouplement ou le désaccouplement entre un arbre 2 d'une machine 3 électrique et un arbre 5 de roues d'un des trains du véhicule, par exemple le train arrière. Les roues du véhicule portent la référence 7.

. Ce dispositif 1 comporte un rapport 8 de vitesse unique formé par un pignon 10 moteur lié en rotation avec l'arbre 2 de la machine 3 et un pignon 11 récepteur monté libre sur un arbre 13 intermédiaire et engrenant avec le pignon 10 moteur.

. Cet arbre 13 intermédiaire est relié à l'arbre 5 de roues par l'intermédiaire d'une descente 14 de pont formée par un pignon 15 de descente lié à l'arbre 13 et un deuxième pignon 16 de descente lié à l'arbre 5 de roues et engrenant avec la première roue 15.

. Par ailleurs, un dispositif 17 de synchronisation et un dispositif 19 de crabotage sont installés de part et d'autre du pignon 11 récepteur. Le dispositif 17 de synchronisation assure la synchronisation de la vitesse de rotation du pignon 11 récepteur avec celle de l'arbre intermédiaire 13, autrement dit la synchronisation entre le régime de l'arbre 5 de roues avec celui de l'arbre 2 de la machine 3 (au rapport de démultiplication près).

. Tandis que le dispositif 19 de crabotage assure la liaison ou non entre le pignon récepteur 11 et l'arbre intermédiaire 13. Lorsque le dispositif 19 de crabotage assure une liaison entre le pignon 11 récepteur et l'arbre 13, la machine 3 est accouplée aux roues 7 via le rapport 8, tandis que lorsque le dispositif 19 de crabotage ne lie pas le pignon 11 récepteur et l'arbre 13 entre eux, la machine 3 est désaccouplée des roues 7. Un exemple détaillé d'un mode de réalisation du dispositif 17 de synchronisation et du dispositif 19 de crabotage est montré sur la figure 3.

. Des capteurs de vitesse 20.1 et 20.2 sont respectivement installés sur l'arbre 2 de la machine 3 et sur l'arbre 5 de roues, afin de mesurer les vitesses de rotation WMEL et WROUES desdits arbres 2 et 5.

. Un contrôleur 20.3 auquel les capteurs 20.1 et 20.2 sont reliés assure la commande de la machine 3 électrique, du dispositif 17 de synchronisation, et du dispositif 19 de crabotage.

. Pour un véhicule hybride, un moteur thermique (non représenté) assure la traction de l'autre train du véhicule, par exemple le train avant.

. La figure 2 montre une représentation de l'évolution temporelle de la consigne de régime WCONS (représenté en traits discontinus) de la machine 3 électrique, du régime de l'arbre 5 de roues WROUES, du couple CMEL et du régime WMEL de l'arbre 2 de la machine 3, du couple de synchronisation CSYN, et de l'effort ECRAB de crabotage, lors de la mise en oeuvre du procédé selon l'invention.

. Pendant la durée du procédé, le véhicule est en mouvement, le régime des roues WROUES étant sensiblement constant. Toutefois, le procédé selon l'invention peut également être mis en oeuvre alors que le véhicule est à l'arrêt.

. A l'instant t0, le contrôleur 20.3 met en action la machine 3 électrique, de sorte qu'elle fournit un couple CMEL positif, le régime WMEL de la machine 3 évoluant vers un régime de consigne WCONS sensiblement égal au régime des roues WROUES (au rapport de démultiplication près).

. A l'instant t1, lorsque le régime WMEL de la machine 3 atteint un seuil calibrable WSEUIL, compris par exemple entre 70 et 95% du régime WROUES de l'arbre 5 de roues (au rapport de démultiplication près), le contrôleur 20.3 impose un couple CMEL nul sur l'arbre 2 de la machine 3.

. Le dispositif 17 de synchronisation est alors actionné de manière à synchroniser le régime WMEL de la machine 3 avec le régime WROUES de l'arbre 5 de roues (au rapport de démultiplication près). Le couple de synchronisation CSYN appliqué par le dispositif 17 de synchronisation dépend alors uniquement des inerties des pièces tournantes montées en amont du dispositif 17 de synchronisation, à savoir la machine 3 et son arbre 2, ainsi que les pignons 10 et 11 du rapport 8. Ainsi, entre les instants t1 et t2, le couple de synchronisation CSYN du dispositif 17 de synchronisation augmente pour atteindre une valeur seuil Cseuil.

. A l'instant t2, dès que le régime WMEL de l'arbre 2 de la machine 3 atteint le régime WROUES des roues (soit le régime de consigne), on commence une phase de crabotage, dans laquelle le contrôleur 20.3 actionne le dispositif 19 de crabotage pour assurer la liaison entre le pignon récepteur 11 et l'arbre intermédiaire 13. Sensiblement en même temps que le pilotage du dispositif 19 de crabotage, le dispositif 17 de synchronisation est libéré. Ainsi entre les instants t2 et t3, l'effort de crabotage ECRAB augmente pour atteindre une valeur seuil Fm, tandis que l'effort de synchronisation CSYN diminue progressivement de manière linéaire.

. A l'instant t3, une fois le dispositif 19 de crabotage en position crabotée, l'effort de crabotage ECRAB est maintenu à la valeur Fm durant une durée de temporisation Ttemp, afin de garantir le maintien de la position crabotée durant la remise sous couple de la chaîne de traction électrique lorsque le couple CMEL est de nouveau appliqué sur l'arbre 2. En parallèle, l'effort de synchronisation CSYN diminue encore progressivement pour finalement s'annuler. La durée de temporisation Ttemp est par exemple comprise entre 50 et 100 millisecondes.

. Une fois le couple moteur CMEL installé le rapport est maintenu uniquement par le système d'anti-lâché intégré aux crabots du dispositif 19 de crabotage.

. La figure 3 présente une vue en coupe du dispositif 17 de synchronisation et du dispositif 19 de crabotage.

. Plus précisément, le dispositif 17 de synchronisation comporte un moyeu 21 central, de forme cylindrique, lié en rotation à l'arbre 13, qui supporte sur son diamètre extérieur un corps 23 de vérin annulaire. Ce corps 23 présente une forme de cloche annulaire réalisée à partir d'une tôle mise en forme, ouverte axialement vers l'extérieur, et comprenant un alésage cylindrique, ce qui représente un moyen de réalisation économique. Un piston 24 coulisse axialement avec étanchéité, dans l'alésage du corps 23 et sur le moyeu central 21.

. Le moyeu 21 central comporte de plus deux canaux radiaux 26, 27 qui permettent, à partir de conduits internes de l'arbre 13, d'alimenter deux chambres 30 et 31 positionnées de part et d'autre du piston 24. Le canal arrière 27 alimente la chambre 30 arrière qui pousse le piston 24 vers le pignon 11 lorsqu'elle est soumise à une pression hydraulique ; et le canal avant 26 alimente la chambre avant 31 qui fait reculer le piston 24 vers l'arrière en l'éloignant du pignon 11, lorsqu'elle est soumise à une pression hydraulique.

. De plus, des ressorts 34 de rappel hélicoïdaux disposés axialement, sont installés dans la chambre avant 31, pour ajouter une force de rappel permanente du piston 24 vers l'arrière.

. Le piston 24 est réalisé à partir d'une tôle mise en forme, qui se termine radialement vers l'extérieur par des dentures externes 37 sortant du corps 23, et pouvant pousser axialement sur des dentures 38 radiales d'une bague 40 conique. Cette bague 40, entrant en coopération avec une partie 41 complémentaire conique du pignon 11, peut être simple ou double.

. Le fonctionnement du dispositif 17 de synchronisation est le suivant.

. Dans une phase de synchronisation, une pression hydraulique dans la chambre 30 arrière, applique une force axiale sur le piston 24 qui pousse à son tour axialement par les dentures externes 37 sur la bague de synchronisation 40, de sorte qu'un couple de synchronisation CSYN est appliqué sur le pignon 11.

. L'effort axial est directement appliqué par le piston 24 sur la bague 40, sans passer par des tringles intermédiaires. Il représente donc assez fidèlement, avec le minimum de frottement, la pression hydraulique qui est précisément modulée au cours du passage, pour adapter le couple de synchronisation CSYN nécessaire.

. A la fin de la synchronisation, le recul du piston 24 est obtenu en diminuant la pression dans la chambre arrière 30, les ressorts de rappel 34 éloignant alors le piston 24 de la bague 40. Pour commander le recul du piston 24 de manière plus rapide, il est également possible d'appliquer une pression hydraulique dans la chambre avant 31 qui applique une force axiale sur le piston 24 dans une direction d'éloignement du pignon 11.

. De plus, les deux chambres avant et arrière 30, 31 restant en permanence remplies d'un fluide résiduel, une pression dynamique équivalente est établie en permanence de chaque côté du piston 24, ce qui crée un équilibre de ces forces dynamiques qui s'annulent. On n'observe donc pas de perturbation de la force délivrée, et ce quelle que soit la vitesse de rotation de l'arbre 13.

. Le dispositif 19 de crabotage est structurellement identique du dispositif 17 de synchronisation, à la différence que le piston 24 se termine radialement vers l'extérieur par des dentures externes 37' sortant du corps 23, et pouvant engrener avec des crabots 44 du pignon fou 11.

. Le fonctionnement du dispositif 19 de crabotage est le suivant.

. Dans une phase de crabotage, une pression hydraulique dans la chambre 30 arrière applique une force axiale sur le piston 24 qui pousse à son tour axialement les dentures externes 37' vers les crabots 44, de sorte que ces dentures 37' s'engagent entre les dents des crabots 44.

. Dans une phase de décrabotage, la pression dans la chambre arrière 30 est diminuée, de sorte que les ressorts de rappel 34 éloignent le piston 24 des crabots 44. Pour commander le recul du piston 24 de manière plus rapide, il est également possible d'appliquer une pression hydraulique dans la chambre avant 31 qui applique une force axiale sur le piston 24 dans une direction d'éloignement du pignon 11.

. L'alimentation des chambres 30 et 31 peut se faire à partir d'une pompe hydraulique et de distributeurs intégrés dans la boîte de vitesses. L'huile interne de la boîte peut être utilisée, ce qui représente une solution économique, le retour d'un éventuel débit de fuite d'huile revenant directement dans le carter.

. La commande hydraulique des dispositifs 17 et 19 peut être remplacée par une commande mécanique plus classique mettant par exemple en oeuvre des fourchettes à commande mécanique par exemple.

. L'utilisation d'un dispositif 17 de synchronisation et d'un dispositif 19 de crabotage distincts l'un de l'autre permet de dissocier les fonctions de crabotage et de synchronisation, de sorte qu'il est possible d'utiliser le synchroniseur en tant que filtre en l'actionnant lors des phases de changement de signe du couple de la machine 3 électrique, afin qu'il apporte un gain sensible en agrément acoustique. Ceci présente un grand intérêt par rapport à un simple système de crabotage qui engendre des chocs lors des phases de montée en couple (positif ou négatif).

. Toutefois, il est possible d'envisager l'utilisation d'un dispositif de crabotage 17 intégrant également une fonction de synchronisation.

## Revendications

1. Procédé d'accouplement entre un arbre (2) d'une machine (3) électrique et un arbre (5) de roues pour véhicule électrique ou hybride, la machine (3) électrique assurant la traction d'un des trains du véhicule,
- ce véhicule comportant un dispositif (1) de transmission installé entre l'arbre (2) de la machine (3) électrique et l'arbre (5) de roues, ce dispositif (1) de transmission comportant un rapport de vitesse (8) formé par un pignon (10) lié en rotation à l'un des arbres (2, 5) et un pignon (11) monté libre sur l'autre arbre (2, 5),
- un dispositif (17) de synchronisation et un dispositif (19) de crabotage étant associés au pignon libre (11) du rapport,
**caractérisé en ce qu'**il comporte les étapes suivantes,
- on fournit à la machine (2) électrique une consigne (WCONS) de régime correspondant à la vitesse (WROUES) de l'arbre (5) de roues, au rapport de démultiplication près entre l'arbre (2) de la machine (3) électrique et l'arbre (5) de roues,
- lorsque la vitesse (WMEL) de l'arbre (2) de la machine (3) électrique atteint un seuil calibrable (WSEUIL), on applique un couple nul sur l'arbre (2) de la machine (3) électrique et on actionne le dispositif (17) de synchronisation de manière à égaliser la vitesse (WMEL) de l'arbre (2) de la machine (3) électrique avec la vitesse (WROUES) de l'arbre (5) de roues, et
- dès que la vitesse (WMEL) de l'arbre (2) de la machine (3) électrique est égale à la vitesse (WROUES) de l'arbre (5) de roues au rapport de démultiplication près, on actionne, dans une phase de crabotage, le dispositif (19) de crabotage, de manière à accoupler l'arbre (2) de la machine (3) électrique avec l'arbre (5) de roues du véhicule.

2. Procédé selon la revendication 1, **caractérisé en ce que** le véhicule est en mouvement de sorte que la vitesse (WROUES) de l'arbre (5) de roues présente une vitesse non nulle.

3. Procédé selon la revendication 1 ou 2, **caractérisé en ce que** le seuil calibrable est compris entre 70 et 95% de la vitesse (WROUES) de rotation des roues.

4. Procédé selon l'une des revendications 1 à 3, **caractérisé en ce que**, après la phase de crabotage, on maintient l'effort de crabotage (ECRAB) pendant une durée de temporisation (Ttemp).

5. Procédé selon la revendication 4, **caractérisé en ce que** la durée de temporisation (Ttemp) est comprise entre 50 et 100 millisecondes.

6. Procédé selon l'une des revendications 1 à 5, **caractérisé en ce que**, après la phase de crabotage, un couple (CMEL) est de nouveau appliqué sur l'arbre (2) de la machine (3) électrique.

7. Véhicule automobile mettant en oeuvre le procédé défini selon l'une des revendications précédentes **caractérisé en ce qu'**il comporte :
- une chaîne de traction assurant la traction d'un des trains du véhicule, cette chaîne de traction comportant une machine (3) électrique ayant un arbre (2) relié à un arbre (5) de roues par l'intermédiaire d'un dispositif (1) de transmission,
- ce dispositif (1) de transmission comportant un rapport de vitesse (8) formé par un pignon (10) lié en rotation à l'un des arbres (2, 5) et un pignon (11) monté libre sur l'autre arbre (2, 5),
- un dispositif (17) de synchronisation et un dispositif (19) de crabotage étant associés au pignon libre (11),
**caractérisé en ce que** le dispositif (17) de synchronisation et le dispositif (19) de crabotage distincts l'un de l'autre sont positionnés de part et d'autre du pignon libre (11) et sont commandés de manière hydraulique.

8. Véhicule selon la revendication 7, **caractérisé en ce que** le rapport de vitesse (8) est unique.

9. Véhicule selon la revendication 7 ou 8, **caractérisé en ce qu'**il comporte une chaîne de traction thermique assurant la traction de l'autre train du véhicule.

10. Véhicule selon la revendication 9, **caractérisé en ce que** la chaîne de traction électrique assure la traction du train arrière, tandis que la chaîne de traction thermique assure la traction du train avant du véhicule.
